# DEMANDE DE BREVET EUROPEEN

(11) **EP 3 549 803 A1**
(43) Date de publication de la demande: **09.10.2019**
(21) Numéro de dépôt: 19167825.9
(22) Date de dépôt: 08.04.2019
(51) Int. Cl.: B60J 1/18, B60J 1/00, B60J 5/10

(54) **ASSEMBLAGE PAR GLISSEMENT D'UNE VITRE ET D'UN HAYON DE VÉHICULE AUTOMOBILE**

(30) Priorité: 06.04.2018 FR 1853047
(71) Demandeur: Compagnie Plastic Omnium, 69007 Lyon (FR)
(72) Inventeur: COUDRON, Philippe, 69300 CALUIRE ET CUIRE (FR)
(74) Mandataire: LLR

(57) **Abrégé**

Hayon arrière (10) pour véhicule automobile comportant une ouverture apte à recevoir une vitre arrière (30), un panneau intérieur et un panneau extérieur (14), dans lequel l'ouverture comprend deux guidages latéraux (26) et un guidage transversal (24) dans lesquels la vitre arrière peut être insérée. L'ouverture comprend également une partie sensiblement plane (22) sur un bord d'approche de l'ouverture apte à accueillir un bord horizontal de la vitre arrière (30). Le hayon (10) comporte des moyens de blocage de la vitre (30) empêchant un mouvement de celle-ci.

## Description

L'invention concerne le domaine des hayons arrière en plastique pour véhicules automobiles.

Un grand nombre de véhicules automobiles comprend un hayon situé à l'arrière du véhicule qui est mobile entre une position fermée et une position ouverte, permettant à un utilisateur situé à l'extérieur du véhicule d'accéder au coffre de celui-ci. Ce hayon comporte généralement au moins deux panneaux, un panneau intérieur et un panneau extérieur.

Le panneau intérieur est une pièce structurelle, assurant la rigidité du hayon, sur laquelle sont fixées des charnières assurant la liaison du hayon avec la caisse du véhicule.

Le panneau extérieur est quant à lui une pièce de carrosserie recouvrant le panneau intérieur et assurant principalement un rôle esthétique.

Le hayon comporte une ouverture sur laquelle est fixée une vitre lors de l'assemblage du hayon sur le véhicule. Plus précisément, celle-ci est fixée par collage, en général sur le panneau intérieur du hayon. L'étanchéité de l'interface entre le hayon et la vitre est assurée par la continuité du cordon de colle entre ces deux éléments.

Ce mode de fixation de la vitre présente plusieurs inconvénients. Tout d'abord, il nécessite la mise en place de moyens industriels de collage, tels qu'une station de collage. La mise ne place de tels moyens est très lourd pour le constructeur, car elle nécessite des investissements financiers importants. De plus, l'opération de collage prend un temps certains sur la ligne de production, ce qui entraîne aussi des surcoûts. De même, le collage de la vitre entraîne de nombreuses difficultés lors des opérations de maintenance sur le hayon. Ainsi, lorsque l'on souhaite par exemple changer cette vitre, il est nécessaire de la décoller du hayon, de retirer de celui-ci tous les résidus du cordon de colle afin d'avoir une surface dans un état permettant le collage d'une nouvelle vitre, et enfin coller cette dernière, opération très délicate pour des concessionnaires automobiles ou garagistes réalisant la maintenance du véhicule. Toutes ces étapes entraînent donc un coût élevé de maintenance. Enfin, le collage de la vitre entraîne des coûts importants en recherche et validation de la colle elle-même, qui doit satisfaire à un cahier des charges contraignant, notamment pour des questions de résistance de la colle nécessaire à une tenue sûre de la vitre sur le hayon.

Sont également connus des hayons de véhicule automobile comportant une vitre mobile escamotable, pouvant se déplacer par coulissement dans des rails afin de permettre à la vitre de libérer une ouverture dans le hayon. Un mécanisme actionne la vitre par l'intermédiaire de cornières coulissant dans des rails de guidage situés dans le hayon, les cornières étant fixés à la vitre par le moyen d'un cordon de colle. Lorsque la vitre est en position d'obstruer l'ouverture, elle est plaquée sur des joints faisant le tour de ladite ouverture pour assurer l'étanchéité du hayon.

Ce type de fixation de la vitre arrière dans le hayon nécessite un volume d'accueil important dans une zone basse du hayon et est donc difficilement compatible avec le design global du hayon. De plus, ce volume occupé rend difficile l'intégration d'équipement embarqués tels que des feux de signalisation ou un essuie-vitre par exemple.

L'invention a pour but de proposer un assemblage d'un hayon et d'une vitre arrière de véhicule automobile qui permette de surmonter les inconvénients précités.

L'invention a donc pour objet un hayon arrière pour véhicule automobile comportant une ouverture apte à recevoir une vitre arrière, un panneau intérieur et un panneau extérieur, dans lequel l'ouverture comprend deux guidages latéraux et un guidage transversal dans lesquels la vitre arrière peut être (directement ou indirectement) insérée, et une partie sensiblement plane sur un bord d'approche de l'ouverture apte à accueillir un bord horizontal de la vitre arrière ; le hayon comportant des moyens de blocage de la vitre empêchant un mouvement de celle-ci.

Ainsi, lors du montage de la vitre arrière sur le hayon, l'opérateur n'a qu'à glisser la vitre dans les guidages latéraux et transversal. Donc, la vitre, qui a une forme générale de quadrilatère, est engagée dans ces guidages sur deux bords latéraux, qui sont sensiblement verticaux une fois que la vitre est montée sur le hayon, et sur un bord horizontal. Un deuxième bord horizontal de la vitre, qui est opposé au premier bord horizontal cité, repose quant à lui sur le bord d'approche de l'ouverture. De cette manière, l'opération coûteuse et fastidieuse de collage de la vitre sur le hayon est remplacée par une simple opération d'insertion de celle-ci dans les guidages du hayon. Le coût des équipements nécessaires au montage de la vitre sur le hayon, ainsi que le temps consacré à cette opération sont fortement diminués.

De la même manière, les opérations de maintenance, telles que le changement de la vitre arrière, sont grandement facilitées. Ainsi, l'opérateur en charge de la maintenance dégage les moyens de blocage de la vitre et la glisse hors des guidages du hayon. Le changement de la vitre ne nécessite plus le décollage de celle-ci du hayon ni le collage de la nouvelle vitre. Supprimer ces opérations de collage de la nouvelle vitre permet de supprimer l'étape nécessitant un matériel coûteux, ainsi que des opérations prenant beaucoup de temps.

Le hayon selon l'invention peut en outre comprendre une ou plusieurs des caractéristiques suivantes :
- au moins un des guidages latéraux et/ou transversal est formé par une rainure ;
- le hayon comporte un becquet et/ou au moins un enjoliveur latéral bordant l'ouverture, dans lequel au moins un des guidages est formé exclusivement par le panneau intérieur ou le becquet ou l'enjoliveur latéral, ou conjointement par le panneau intérieur et le becquet ou par le panneau intérieur et l'enjoliveur latéral ;
- les moyens de blocage comportent un élément d'habillage et des goujons empêchant une sortie de la vitre de l'ouverture du hayon.

L'invention concerne également un ensemble d'une vitre et d'un hayon arrière pour véhicule automobile tel que décrit précédemment.

L'ensemble selon l'invention peut en outre comprendre une ou plusieurs des caractéristiques suivantes :
- la vitre comporte un bord horizontal inférieur et un bord horizontal supérieur, et a une forme générale de trapèze, ses bords horizontaux constituant les bases du trapèze, le bord horizontal supérieur ayant une longueur différente de la longueur du bord horizontal inférieur ;
- la vitre comprend des bords sensiblement verticaux et un encapsulage parcourant de façon continue chacun de ses bords horizontaux et sensiblement verticaux, l'encapsulage assurant l'étanchéité autour de la vitre.
- le hayon comprend un becquet formant saillie d'une partie supérieure du hayon, le becquet comprenant une face inférieure en regard de la vitre, la face comprenant un bossage à proximité de ladite vitre.

L'invention concerne également un procédé de montage d'un ensemble selon l'invention, qui comprend les étapes :
- d'insertion des bords sensiblement verticaux de la vitre dans les guidages latéraux de l'ouverture du hayon,
- de coulissement de la vitre dans les guidages latéraux,
- d'entrée d'un des bords horizontaux de la vitre dans le guidage transversal de l'ouverture du hayon, et
- de blocage de la vitre à l'aide des moyens de blocages du hayon.

Avantageusement, la vitre est insérée du bas vers le haut du hayon, par référence à l'orientation du hayon quand celui-ci est monté sur un véhicule automobile dans une position fermée.

Avantageusement, la vitre est insérée du haut vers le bas du hayon, par référence à l'orientation du hayon quand celui-ci est monté sur un véhicule automobile dans une position fermée.

L'invention sera mieux comprise à la lecture des figures annexées, qui sont fournies à titre d'exemple et ne présentent aucun caractère limitatif, dans lesquelles :
- la figure 1 est une vue en coupe d'une partie supérieure d'un ensemble selon un premier mode de réalisation de l'invention ;
- les figures 2 et 3 sont des vues en coupe d'une partie d'un ensemble selon le premier mode de réalisation l'invention ;
- la figure 4 est une vue en coupe d'une partie latérale d'un ensemble selon le premier mode de réalisation de l'invention ;
- la figure 5 est une vue éclatée d'un l'ensemble selon l'invention ;
- la figure 6 est une vue en perspective d'un ensemble en configuration assemblée selon l'invention ;
- la figure 7 est une vue en coupe d'un ensemble selon un deuxième mode de réalisation de l'invention.
- la figure 8 est une vue en perspective illustrant la pose de la vitre selon le premier mode de réalisation de l'invention.

Dans ce qui suit, les termes tels que «axe longitudinal X », « axe transversal Y », « axe vertical Z », « avant », « arrière », « au-dessus », « supérieur », « en-dessous », « inférieur », etc. s'entendent par référence à l'orientation usuelle des véhicules automobiles selon les repères représentés sur les figures.

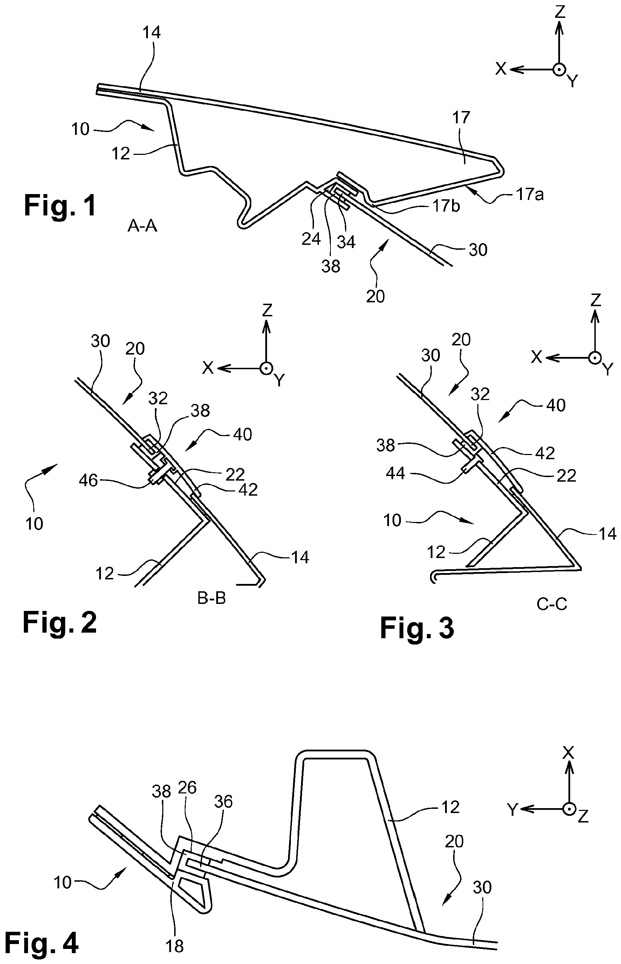

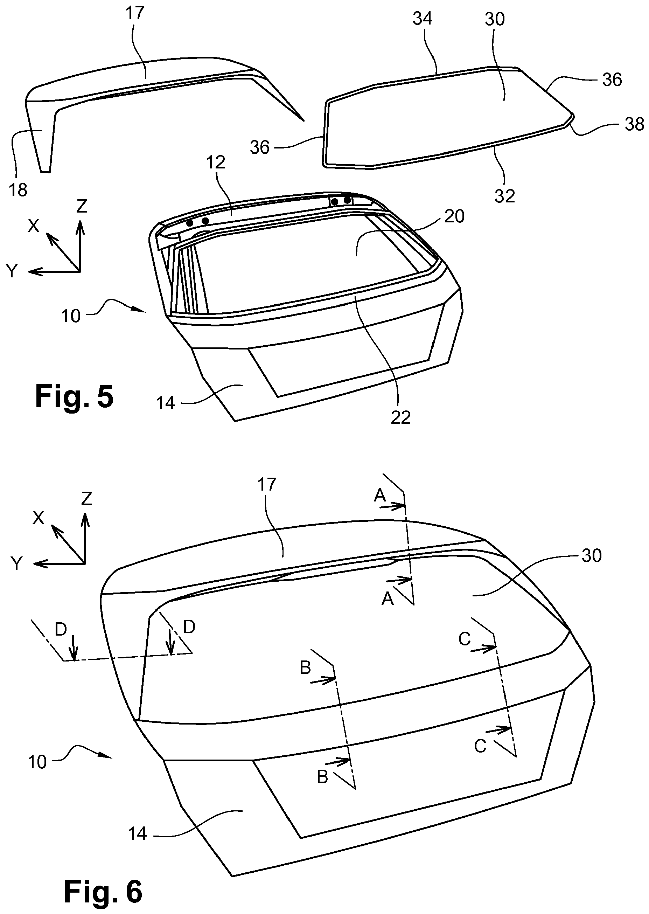

On se réfère maintenant aux figures 1, 2, 3 et 4 qui sont des sections partielles d'un hayon et d'une vitre arrière de véhicule selon un premier mode de réalisation de l'invention, respectivement selon des plans A-A, B-B, C-C et D-D tel que représenté sur la figure 5.

La figure 1 présente une partie supérieure d'un hayon 10 de véhicule automobile. Ce hayon comporte deux panneaux distincts, un panneau intérieur 12, qui est une pièce structurelle du hayon 10, et un panneau extérieur 14, qui est une pièce ayant principalement un rôle esthétique. Ce hayon 10 comporte également une ouverture 20 aménagée dans celui-ci. Cette ouverture 20 est située sur une moitié supérieure du hayon 10, quand celui-ci est monté sur un véhicule automobile. L'ouverture 20 accueille une vitre arrière 30, permettant à un conducteur ou un passager du véhicule d'avoir une visibilité à travers le hayon. Cette vitre arrière 30 est montée fixe sur le hayon 10, c'est-à-dire qu'elle n'est pas escamotable sans la démonter du hayon 10.

La figure 1 présente un guidage supérieur 24 aménagé sur une partie supérieure de l'ouverture 20. Ce guidage supérieur 24 est en forme de rainure et accueille un bord horizontal supérieur 34 de la vitre arrière 30. La forme de ce guidage est en U suivant la section dans laquelle le hayon est représenté. Ce bord supérieur horizontal 34 est inséré dans le guidage supérieur 24, de manière à ce qu'une étanchéité soit assurée au niveau de l'interface entre la vitre et le guidage, comme cela est expliqué plus loin.

La figure 4 présente quant à elle une partie latérale du hayon 10. Cette partie latérale comporte également l'ouverture 20 du hayon 10. L'ouverture 20 comporte un guidage latéral 26, en forme de rainure lui aussi, qui accueille un bord latéral 36 de la vitre 30. Ce bord latéral 36 est inséré dans le guidage latéral 26, de manière à ce qu'une étanchéité soit assurée au niveau de l'interface entre la vitre 20 et le guidage 26. La même structure est présente sur l'autre partie latérale du hayon 10.

Les figures 2 et 3 présentent quant à elles une partie sensiblement plane de l'ouverture sur un bord d'approche 22 située au bas de l'ouverture du hayon 10, juste au-dessus du panneau 14. Ce bord d'approche 22 s'étend sensiblement sur toute la largeur du bas de l'ouverture et présente une surface continue, sensiblement plane, suivant la courbure transversale du véhicule. Ce bord d'approche 22 est apte à accueillir un bord horizontal inférieur 32 de la vitre 30, et à lui servir de zone d'appui. Ce bord inférieur 32 repose sur la partie sensiblement plane 22, qui sert d'appui en X à la vitre 30. Le hayon 10 comporte des moyens de blocage 40 de la vitre 30. Ces moyens de blocage 40 empêchent la vitre de descendre sous l'effet, de la gravité et des vibrations subies par le véhicule. Ainsi, ces moyens de blocage 40 assurent que la vitre 30 reste bien insérée dans les guidages latéraux 26 et supérieur 24 et l'empêche de se désengager desdits guidages 24, 26.

On notera que dans l'exemple illustré, les moyens de blocage 40 sont positionnés et accessibles depuis le côté extérieur du hayon 10. La partie sensiblement plane 22 forme une butée pour la vitre 30, la vitre 30 étant destinée à être maintenue entre la partie sensiblement plane 22 et les moyens de blocage 40.

Dans l'exemple décrit, les moyens de blocage 40 étant positionnés et accessibles du côté extérieur du hayon 10, cela permet de pouvoir facilement intervenir sur le hayon 10, notamment lors du montage ou du changement de la vitre 30 dans l'ouverture 20. En particulier, cela permet de pouvoir monter la vitre 30 lorsque le hayon est d'ores et déjà est fixé sur le véhicule automobile et en position fermée, c'est-à-dire dans une position de montage ergonomique et permettant une accessibilité aisée.

Le hayon 10 comporte un élément d'habillage 42 qui recouvre le bord horizontal inférieur 32 de la vitre 30, le bord d'approche 22 et une extrémité du panneau extérieur 14 du hayon 10. Des goujons 44 sont insérés dans le bord d'approche 22 et font office de butée Z pour la vitre 30, au moyen d'un contact avec le bord inférieur 32 de celle-ci. Des vis 46 de l'élément d'habillage 42 traversent aussi le bord d'approche 22 et fixent l'élément d'habillage 42 à audit bord d'approche 22. Ainsi, le bord horizontal inférieur 32 de la vitre 30 est compressé entre l'élément d'habillage 42 et la partie sensiblement plane 22, assurant ainsi l'étanchéité au niveau de la liaison entre la vitre 30 et le hayon 10. De même, le bord horizontal inférieur 32 de la vitre 30 est ainsi bien fixé au hayon 10. L'élément d'habillage 42 permet aussi de cacher le bord horizontal inférieur 32 de la vitre 30, pour préserver le bon aspect esthétique du hayon 10.

On peut voir sur la figure 1 que le guidage horizontal supérieur 24 est aménagé entièrement dans le panneau intérieur 12 du hayon 10.

Par ailleurs, le guidage latéral 26 est lui aménagé conjointement entre le panneau intérieur 12 et un enjoliveur latéral 18, le panneau intérieur ayant une forme d'équerre au niveau du guidage 26 et l'enjoliveur latéral 18 formant la troisième paroi de ce guidage 26. Par enjoliveur latéral 18, on entend une pièce d'habillage placée par dessus le panneau intérieur 12, bordant les côtés latéraux de l'ouverture 20 et pouvant être en continuité d'un becquet 17 placé en partie supérieure du hayon 10.

Ainsi, chacun des guidages 24, 26 est formé soit exclusivement par le panneau intérieur 12 ou le ou le becquet 17 ou l'enjoliveur latéral 18, soit conjointement par les panneau intérieur 12 et le becquet 17 ou par le panneau intérieur 12 et l'enjoliveur latéral 18.

Un guidage formé uniquement par une seule pièce (par exemple le panneau intérieur 12) permet d'obtenir une meilleure précision géométrique pour la hauteur du guidage, c'est-à-dire la distance séparant deux parties du guidage qui enserrent le bord de la vitre 30. Cette précision permet d'avoir un bon serrage du bord de la vitre 30, pour une meilleure étanchéité. De plus, cette disposition permet d'obtenir une bonne rigidité au niveau du guidage, permettant de la même façon un meilleur serrage autour des bords de la vitre 30.

Dans le cas où le guidage est formé conjointement par deux pièces distinctes (par exemple le panneau intérieur 12 et le l'enjoliveur latéral 18 ou le becquet 17), permet de faciliter la production par moulage des pièces concernées, car la direction de démoulage de chaque guidage est incompatible avec la direction principale de démoulage du reste de la pièce. Ainsi, le démoulage de la pièce est plus complexe.

La figure 5 présente une vue isométrique du hayon 10 et de la vitre 30, pour lequel la vitre 30 n'a pas encore été fixée.

On peut voir que la vitre 30 présente une forme générale trapézoïdale, ses bords supérieurs 34 et inférieur 32 constituant les bases du trapèze, le bord supérieur 34 ayant une longueur inférieure à la longueur du bord inférieur 32. Cette disposition est particulièrement avantageuse lors du montage de la vitre 30 sur le hayon 10, comme nous le verrons plus tard.

La vitre 30 comprend un encapsulage 38 parcourant de façon continue chacun de ses bords latéraux 36, horizontal supérieur 34 et horizontal inférieur 32, l'encapsulage 38 assurant l'étanchéité autour de la vitre 30. Cet encapsulage 38 est réalisé en matière compressible, par exemple intégrant un élastomère, de type éthylène-propylène-diène monomère (EPDM), et permet, lorsqu'il est respectivement inséré dans les guidages 24, 26 ou comprimé entre le bord d'approche 22 et l'élément d'habillage 42, de réaliser l'étanchéité de l'ouverture 20 sur tous les bords de la vitre 30.

De manière alternative, cet encapsulage 38 de la vitre 30 peut être remplacé par des joints périphériques intégrés dans les guidages 24, 26, sur la partie sensiblement plane 22 et sur l'élément d'habillage 42, afin d'assurer cette étanchéité.

Le becquet comporte une face inférieure 17a en regard de la vitre arrière 30 du hayon 10. La face 17a comprend un bossage 17b à proximité de ladite vitre. Ce bossage 17b permet de cacher le guidage supérieur 24 et le bord supérieur 34 de la vitre 30 à un utilisateur qui regarderait le hayon 10. Cette disposition est donc particulièrement avantageuse d'un point de vue esthétique.

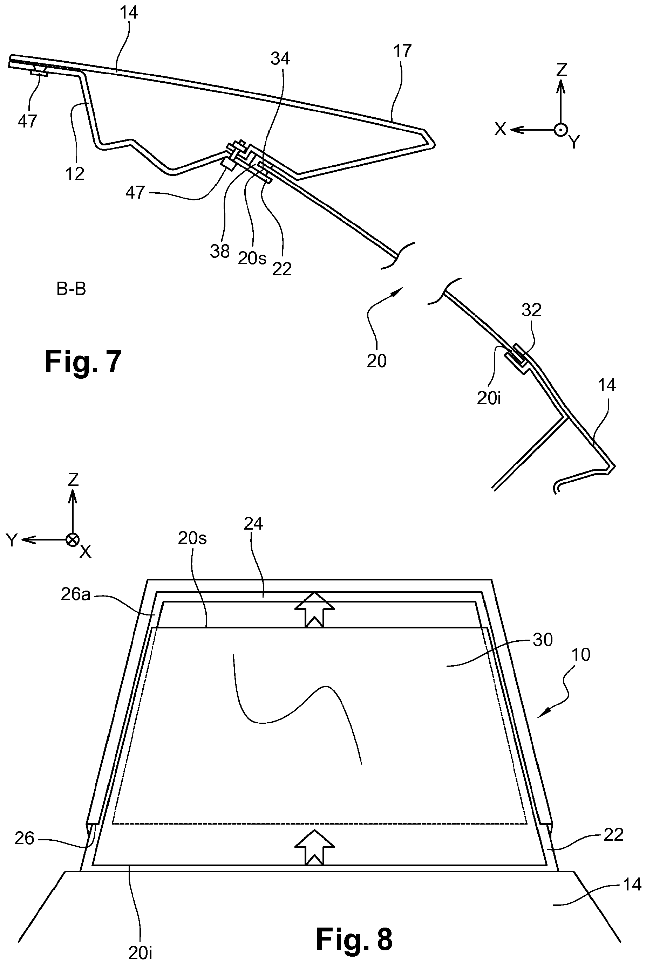

Nous allons maintenant décrire un second mode de réalisation, illustré par la figure 7 qui est une section du hayon 10 selon le plan C-C représenté sur la figure 5. Ce mode est semblable au premier décrit, à l'exception des éléments que nous allons énoncer ci-dessous.

La principale différence entre ce mode de réalisation et le premier décrit est que le bord d'approche 22 de l'ouverture est ici situé en haut de l'ouverture 20. La vitre 30 est ainsi insérée par un bord supérieur 20s de l'ouverture 20. Cette fois, c'est le bord horizontal inférieur 32 de la vitre qui est inséré dans le guidage horizontal 24 de l'ouverture 20. Le guidage horizontal 24 est donc situé au niveau d'un bord inférieur 20i de l'ouverture 20.

Dans ce cas, c'est le becquet 17 qui forme les moyens de blocage 40 de la vitre 30, et forme conjointement avec le panneau intérieur 12 une rainure supérieure qui compresse le bord horizontal supérieur 34 de la vitre 30, lorsque le becquet 17 est fixé sur le hayon 10. Les guidages latéraux 26 sont formés de la même façon que dans le mode de réalisation précédemment cité, à l'exception que cette fois, le bord supérieur 20s de l'ouverture 20 est plus long que le bord inférieur 20i. De cette façon, la forme de trapèze est inversée par rapport au mode de réalisation précédent. Le guidage horizontal 24 est lui formé conjointement par le panneau intérieur 12 et le panneau extérieur 14. Il est également possible que ce guidage horizontal 24 soit formé uniquement par le panneau intérieur 12, ou uniquement par le panneau extérieur 14.

Dans ce mode de réalisation, l'élément d'habillage 42 n'est plus présent, les goujons 46 non plus.

Nous allons maintenant décrire le procédé de pose de la vitre 30, selon le premier mode de réalisation de l'invention, sur le hayon 10 lors de l'assemblage de celui-ci sur un véhicule automobile.

Au moment de la pose de la vitre 30, les panneaux intérieur 12 et extérieur 14 du hayon 10 sont déjà assemblés entre eux, ainsi que les enjoliveurs latéraux, de préférence par collage. Le becquet 17 peut aussi être déjà assemblé au panneau intérieur, de préférence aussi par collage.

Le procédé d'assemblage de la vitre sur le hayon comprend les étapes développées ci-dessous.

On approche la vitre sur l'ouverture 20, son bord inférieur 32 étant placé contre le bord d'approche 22, les bords latéraux étant en appui contre une paroi avant 26a des deux guidages latéraux, son bord horizontal supérieur 34 étant à distance du guidage horizontal 24. La vitre est poussée par glissement en translation vers le haut, en restant en contact du bord d'approche 22. Lors de ce déplacement, du fait de la forme trapézoïdale de la vitre 30, on insère progressivement les bords latéraux 36 de la vitre 30 dans les guidages latéraux 26. En fin de course, le bord supérieur 34 de la vitre 30 s'insère dans le guidage supérieur 24. Le bord horizontal supérieur 34 de la vitre 30 atteint une position de butée, comme on peut le voir sur la figure 1. La vitre 30 est maintenue en position finale insérée à l'aide des goujons de blocage 44. On dispose par-dessus le bord horizontal inférieur 32 de la vitre 30, un élément d'habillage 42 équipé de vis 46 grâce auxquelles on fixe l'élément d'habillage 42 sur le hayon 10 en comprimant l'encapsulage 38.

Les moyens de blocage 40 comprennent dans le mode de réalisation présenté des goujons 44 et des vis 46 intégrées à l'élément d'habillage 42.

Plus précisément, on insère d'abord les goujons 44 (visibles sur la figure 3) dans des trous du bord d'approche 22 de l'ouverture 20, juste en dessous du bord horizontal inférieur 32 de la vitre 30. Ainsi, celle-ci est bloquée en Z dans sa position finale de montage. On place ensuite l'élément d'habillage 42 sur le hayon 10 à l'aide de vis 46 qui traversent le bord d'approche 22 de l'ouverture 20. On finit par fixer cet élément 42 en serrant des écrous sur les vis 46, les écrous venant en appui sur le panneau intérieur 12 du hayon 10.

De cette manière, l'opération coûteuse et fastidieuse de collage de la vitre sur le hayon est remplacée par une simple opération d'insertion de celle-ci dans les guidages du hayon. Le coût des équipements nécessaires au montage de la vitre sur le hayon, ainsi que le temps consacré à cette opération sont fortement diminués.

On peut aussi noter que le changement d'une telle vitre sur un véhicule est très aisé avec hayon 10 selon l'invention. En effet, il suffit de retirer les moyens de blocage 40 et de coulisser la vitre vers le bas pour la désolidariser du hayon. De même, le remplacement de celle-ci est très simple et la pose d'une nouvelle vitre suit les mêmes étapes que lors du montage décrit précédemment.

Le procédé de pose de la vitre 30 sur le hayon 10, selon le deuxième mode de réalisation, présenté en figure 7, comprend les étapes développées ci-dessous.

On approche la vitre sur l'ouverture 20, son bord horizontal supérieur 34 étant placé contre le bord d'approche 22, les bords latéraux étant en appui contre une paroi avant 26a des deux guidages latéraux, son bord horizontal inférieur 32 étant à distance du guidage horizontal 24. La vitre est poussée par glissement en translation vers le bas, en restant en contact du bord d'approche 22. Lors de ce déplacement, du fait de la forme trapézoïdale de la vitre 30 (dont la petite base est cette fois en bas de la vitre 30), on insère progressivement les bords latéraux 36 de la vitre 30 dans les guidages latéraux 26. En fin de course, le bord horizontal inférieur 34 de la vitre 30 s'insère dans le guidage horizontal 24. Le bord horizontal inférieur 32 de la vitre 30 atteint une position de butée, comme on peut le voir sur la figure 7. On dispose par-dessus le bord horizontal supérieur 34 de la vitre 30, le becquet 17 équipé de vis 46 grâce auxquelles il est fixé sur le hayon 10 en comprimant l'encapsulage 38.

Les moyens de blocage 40 comprennent dans le mode de réalisation présenté le becquet 17 et des vis 47.

On finit par fixer le becquet 17 en serrant des écrous sur les vis 47, les écrous venant en appui sur le panneau intérieur 12 du hayon 10La figure 8 présente l'insertion de la vitre 30 en forme de trapèze dans l'ouverture 20. On peut noter que la forme de trapèze de la vitre 30, qui est la même que la forme de l'ouverture 20, permet que les étapes d'insertion de la vitre dans les guidages latéraux 26 et dans le guidages supérieur 24 aient lieu de manière quasiment simultanée. On a donc une insertion progressive de la vitre dans les guidages latéraux 26, et ce dans la profondeur de ces guidages 26. Donc, chaque bord latéral 36 de la vitre 30 entre en contact simultanément avec toute la longueur de chaque guidage latéral 26, puis pénètre dans ces guidages 26. Ensuite, quand la vitre 30 arrive en bout de course verticale, son bord horizontal est inséré dans le guidage horizontal 24 de l'ouverture 20. À la fin de l'insertion, le bord horizontal et les deux bords latéraux 36 de la vitre 30 atteignent simultanément leur position définitive en butée dans les guidages 24, 26. De ce fait, l'insertion de la vitre 30 est facilitée grâce à un raccourcissement de l'étape de coulissement de celle-ci dans les guidages latéraux, qui peut générer un coincement de celle-ci si la poussée n'est pas effectuée de manière bien droite.

### Nomenclature :

10 : hayon arrière de véhicule automobile
12 : panneau intérieur du hayon
14 : panneau extérieur du hayon
17 : becquet
17a : face inférieure du becquet
17b : bossage du becquet
18 : enjoliveur latéral
20 : ouverture du hayon
20i : bord inférieur de l'ouverture
20s : bord supérieur de l'ouverture
22 : partie sensiblement plane sur le bord d'approche de l'ouverture
24 : guidage transversal de l'ouverture
26 : guidages latéraux de l'ouverture
26a : paroi avant du hayon
30 : vitre arrière
32 : bord horizontal inférieur de la vitre
34 : bord horizontal supérieur de la vitre
36 : bords latéraux de la vitre
38 : encapsulage de la vitre
40 : moyens de blocage
42 : élément d'habillage
44 : goujon
46, 47 : vis

## Revendications

1. Hayon arrière (10) pour véhicule automobile comportant une ouverture (20) apte à recevoir une vitre arrière (30), un panneau intérieur (12) et un panneau extérieur (14), **caractérisé en ce que** :
- l'ouverture (20) comprend :
∘ deux guidages latéraux (26) et un guidage transversal (24) dans lesquels la vitre arrière peut être insérée ;
∘ une partie sensiblement plane (22) sur un bord d'approche de l'ouverture (20) apte à accueillir un bord horizontal (32, 34) de la vitre arrière (30) ;
- le hayon (10) comporte des moyens de blocage (40) de la vitre (30) empêchant un mouvement de celle-ci.

2. Hayon selon la revendication précédente dans lequel au moins un des guidages latéraux (26) et/ou transversal (24) est formé par une rainure.

3. Hayon selon l'une des revendications précédentes qui comporte un becquet (17) et/ou au moins un enjoliveur latéral (18) bordant l'ouverture (20), dans lequel au moins un des guidages (24, 26) est formé exclusivement par le panneau intérieur (12) ou le becquet (17) ou l'enjoliveur latéral (18), ou conjointement par le panneau intérieur (12) et le becquet (17) ou par le panneau intérieur (12) et l'enjoliveur latéral (18).

4. Hayon (10) selon l'une des revendications précédentes dans lequel les moyens de blocage (40) comportent un élément d'habillage (42) et des goujons (44) empêchant une sortie de la vitre (30) de l'ouverture (20) du hayon (10).

5. Ensemble d'une vitre (30) et d'un hayon (10) arrière pour véhicule automobile selon l'une des revendications précédentes.

6. Ensemble selon la revendication 5, dans lequel la vitre (30) comporte un bord horizontal inférieur (32) et un bord horizontal supérieur (34), et a une forme générale de trapèze, ses bords horizontaux (32, 34) constituant les bases du trapèze, le bord horizontal supérieur (34) ayant une longueur différente de la longueur du bord horizontal inférieur (32).

7. Ensemble selon l'une des revendications 5 et 6, dans lequel la vitre (30) comprend des bords sensiblement verticaux (36) et un encapsulage (38) parcourant de façon continue chacun de ses bords horizontaux (32, 34) et sensiblement verticaux (36), l'encapsulage (38) assurant l'étanchéité autour de la vitre (30).

8. Ensemble selon l'une des revendications 5 à 7, dans lequel le hayon (10) comprend un becquet (17) formant saillie d'une partie supérieure du hayon (10), le becquet (17) comprenant une face inférieure en regard de la vitre, la face comprenant un bossage (17b) à proximité de ladite vitre (30).

9. Procédé de montage d'un ensemble selon l'une au moins des revendications 7 et 8, **caractérisé en ce qu'**il comprend les étapes :
- d'insertion des bords sensiblement verticaux (36) de la vitre (30) dans les guidages latéraux (26) de l'ouverture (20) du hayon (10),
- de coulissement de la vitre (30) dans les guidages latéraux (26),
- d'entrée d'un des bords horizontaux (32, 34) de la vitre dans le guidage transversal (24) de l'ouverture (20) du hayon (10), et
- de blocage de la vitre (30) à l'aide des moyens de blocages (40) du hayon (10).

10. Procédé de montage d'un ensemble selon la revendication précédente dans lequel la vitre (30) est insérée du bas vers le haut du hayon (10), par référence à l'orientation du hayon quand celui-ci est monté sur un véhicule automobile dans une position fermée.

11. Procédé de montage d'un ensemble selon la revendication 9 dans lequel la vitre (30) est insérée du haut vers le bas du hayon (10), par référence à l'orientation du hayon quand celui-ci est monté sur un véhicule automobile dans une position fermée.
